# EUROPÄISCHE PATENTSCHRIFT

(11) **EP 0 392 219 B1**
(45) Veröffentlichungstag und Bekanntmachung des Hinweises auf die Patenterteilung: **05.01.1994**
(21) Anmeldenummer: 90105178.9
(22) Anmeldetag: 20.03.1990
(51) Int. Cl.: F16G 15/04

(54) **Einsatzkettenglied**
Insertable chain link
Maillon de chaîne insérable

(30) Priorität: 12.04.1989 DE 3911895
(43) Veröffentlichungstag der Anmeldung: 17.10.1990
(73) Patentinhaber: Salzgitter Maschinenbau GmbH, D-38259 Salzgitter (DE)
(72) Erfinder:

(56) Entgegenhaltungen:
- DE-A- 3 632 026
- DE-C- 526 986
- DE-C- 637 702
- GB-A- 774 212
- GB-A- 1 145 892
- GB-A- 2 180 910

## Beschreibung

Die Erfindung betrifft ein Kettenglied mit einem unterbrochenen Schenkel, dessen Unterbrechungsöffnung durch ein seitlich einsetzbares Verbindungsstück überbrückbar ist, in dem ein in Einsatzrichtung verlaufender und in dieser Richtung in dem Einsatzstück gegen die Kraft einer Feder von außen her verschiebbarer Bolzen drehbar gelagert ist, der seitlich vorstehende Nocken oder dergleichen aufweist, mit denen durch Drehen des Bolzens Anlageflächen des Kettengliedes hintergriffen werden und dadurch das Verbindungsstück in seiner Schließlage gesichert ist, wobei das freie Ende des Bolzens bei in die Unterbrechungsöffnung eingesetztem Verbindungsstück in eine Bohrung des nicht unterbrochenen Schenkels des Kettengliedes hineinragt.

Bei einem bekannten Kettenglied dieser Art (DE-A1 36 32 026) legen sich die an dem Bolzen vorgesehenen Nocken gegen die Innenflächen des unterbrochenen Schenkels an. Diese Flächen sind nicht bearbeitet, ergeben daher keine genaue Anlage der Nocken. Sowohl sie wie auch die Nocken können bei dem rauhen Betrieb, dem sie unterworfen werden, leicht Beschädigungen erfahren, die ein einwandfreies Sichern des Verbindungsstücks in dem unterbrochenen Schenkel nicht gewährleisten.

Die der Erfindung zugrundeliegende Aufgabe besteht darin, die Verriegelungsmittel so anzuordnen, daß sie vor derartigen Gefahren geschützt sind. Das wird erfindungsgemäß dadurch erreicht, daß die Nocken am freien Ende des Bolzens und die Anlageflächen für die Nocken axial innerhalb der Bohrung vorgesehen sind, die mit dem Nockenquerschnitt entsprechenden Durchführungsnuten versehen ist.

Es versteht sich, daß gegebenenfalls auch nur ein Nocken an dem Bolzen und nur eine Durchführungsnut in der Bohrung vorgesehen sein kann.

Die Anlageflächen werden vorzugsweise durch eine Schulter der Bohrung, d.h. durch eine stufenartige Erweiterung der Bohrung gebildet.

Zur Sicherung des Bolzens in einer Drehstellung in der die Nocken die Schulterfläche hintergreifen, sind in dieser Rasten vorgesehen. Es können für jeden Nocken eine oder mehrere Rasten vorhanden sein, wobei bei mehreren Rasten pro Nocken die Rasten in Umfangsrichtung der Schulter hintereinander angeordnet und in der Höhe gestuft sind, also unterschiedliche Höhe aufweisen. Dadurch kann die den Bolzen beaufschlagende Feder unterschiedlich stark gespannt werden.

Das bekannte Kettenglied gemäß DE-A1 36 32 026 weist - wie auch andere bekannte Kettenglieder (NL-C 148 689, DE-C 526 986 und 637 702) - den Nachteil auf, daß das Einsetzen oder Herausnehmen des Verbindungsstücks nur unter Zuhilfenahme eines Werkzeuges vorgenommen werden kann. Das Hineinragen des freien Bolzenendes in eine Bohrung des nicht unterbrochenen Schenkels des Kettengliedes dient bei den beiden letztgenannten bekannten Kettengliedern auch nicht dem Schutz von für die Sicherung des Verbindungsgliedes wichtigen Bauteilen.

Durch eine weitere Ausgestaltung des Kettengliedes gemäß der Erfindung wird erreicht, daß für das Einsetzen oder Herausnehmen des Verbindungsstücks ein Werkzeug nicht benötigt wird, und zwar dadurch, daß auf dem Bolzen ein unrunder Betätigungsklotz undrehbar aber begrenzt längsverschieblich angeordnet ist, daß er bei eingesetztem Verbindungsstück sich zwischen den beiden Schenkeln des Kettengliedes befindet. Mittels dieses Betätigungsklotzes kann der Bolzen von Hand gedreht und damit das Ein- und Ausrasten der Nocken bewirkt werden, wenn man gleichzeitig durch einen Druck mit einem Finger der anderen Hand auf das in dem Verbindungsstück befindliche Ende des Bolzens diesen axial verschiebt.

Man erkennt ohne weiteres, daß bei dem Kettenglied gemäß der NL-C 148 689 der Bolzen nur mittels eines in ein Innensechskant des Bolzens eingreifenden Schlüssels eingedrückt und gedreht werden kann und daß bei den Kettengliedern gemäß den DE-C 526 986 und 637 702 das mutterartige Verriegelungsglied nur durch langwieriges Drehen mittels eines Stiftes in die Verriegelungsstellung gebracht werden kann.

Damit der vorzugsweise vierkantige Betätigungsklotz eine gute seitliche Führung erhält, weist der nicht unterbrochene Schenkel des Kettengliedes eine die dort vorgesehene Bohrung umgebende butzenartige Erhöhung auf, die bearbeitet werden kann, während auf der anderen Seite des Betätigungsklotzes eine ebenfalls bearbeitete Fläche des Verbindungsstückes als Führung dient.

Es ist vorteilhaft, wenn der Betätigungsklotz auf seinen Seitenflächen Sichtmerkmale aufweist, aus denen man erkennen kann, ob sich der Bolzen in der Einraststellung befindet oder nicht, z.B. mittels Aufschriften oder Farben.

In der Zeichnung ist die Erfindung veranschaulicht, und zwar zeigen
- Fig. 1: ein Kettenglied gemäß der Erfindung in Seitenansicht, teils im Schnitt und
- Fig. 2: das Verbindungsstück für sich im Schnitt und
- Fig. 3: einen Ausschnitt des nicht unterbrochenen Schenkels im Schnitt in einem größeren Maßstab.

Das Kettenglied 1 weist einen geschlossenen Schenkel 2 und einen in der Mitte unterbrochenen Schenkel 3a und 3b auf. Die schenkelteile 3a und 3b sind an ihren freien Enden mit hinterschnittenen Teilen 4 versehen, die von entsprechend ausgebildeten Teilen 5 eines Verbindungsstücks 6 beim Einsetzen des letzteren umgriffen werden. In dem Verbindungsstück ist ein Bolzen 7 längsverschiebbar und drehbar angeordnet. Er steht unter der Wirkung einer Feder 8, die ihn in der Zeichnung nach links zu bewegen sucht. Daran hindert ihn jedoch ein Stift 9, der quer durch ein Langloch 10 des Bolzens 7 verläuft und in einem Betätigungsklotz 11 steckt, der verschiebbar auf dem Bolzen angeordnet ist. Bei in den unterbrochenen Schenkel 3a, 3b eingesetztem Verbindungsstück befindet sich der Betätigungsklotz 11 in dem Innenraum 12 des Kettengliedes 1. Dabei dient ihm die bearbeitete Innenfläche eines auf der Innenseite des geschlossenen Schenkels 2 vorgesehenen Butzen 13 als Führung. In diesem Schenkel befindet sich eine Bohrung 14, in die das freie Ende 15 des Bolzens 7 hineinragt. Der Bolzen weist an diesem Ende zwei seitlich vorstehende Nocken auf, die durch einen quer durch den Bolzen geführten und beidseits überstehenden Stift 16 gebildet sind. Die Bohrung 14 ist an ihrem äußeren Ende stufenartig erweitert, so daß eine Schulter 17a vorhanden ist, in der zwei Rasten 18 vorgesehen sind, in die nach Einrücken des Bolzens 7 entgegen der Kraft der Feder 8 und Drehen des Bolzens mittels des Betätigungsklotzes 11 die Enden des Stiftes 16 einrasten können in denen sie durch die Feder 8 gehalten werden. Für die Durchführung des mit dem beidseits vorstehenden Stift 16 versehenen Bolzens 7 durch die Bohrung 14 ist diese mit zwei einander gegenüberliegenden Längsnuten 19 versehen, durch die hindurch die Enden des Stiftes 16 von der Innenseite des Schenkels 2 zur Außenseite gelangen können.

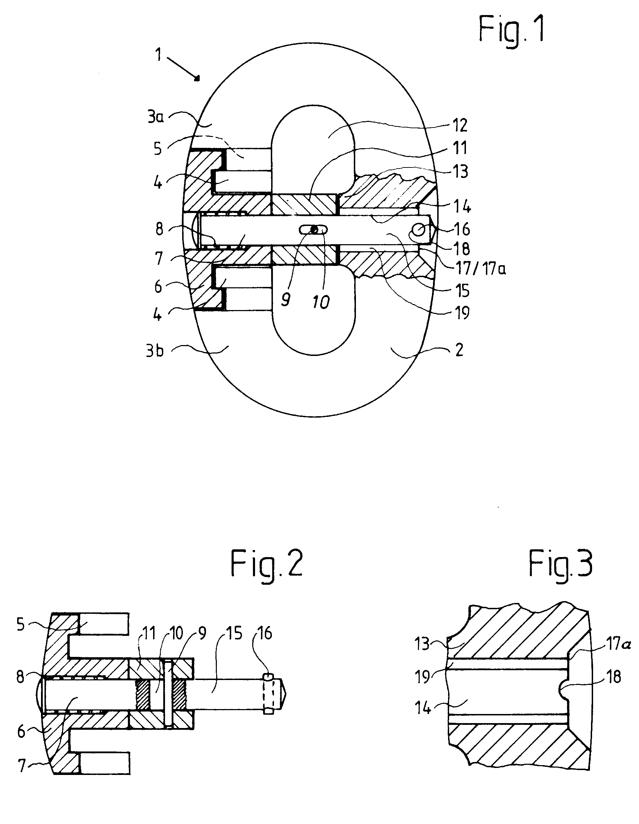

Befindet sich das Verbindungsstück 6 außerhalb des Kettengliedes 1 (Fig. 2), so ist der Bolzen 7 unter der Wirkung der Feder 8 gegen den Stift 9 und damit der Betätigungsklotz 11 gegen das Verbindungsstück 6 gezogen, so daß das Ganze eine Einheit bildet.

Will man das Kettenglied schließen, so schiebt man das Verbindungsstück 6 von der Seite her in die zwischen den beiden Schenkelteilen 3a, 3b befindliche Lücke ein, wobei man darauf achtet, daß sich das freie Ende 15 des Bolzens 7 in die in dem geschlossenen Schenkel 2 des Kettengliedes vorgesehene Bohrung 14 so hineinbewegt, daß die seitlich vorstehenden Enden des Stiftes 16 in die Längsnuten 19 gelangen. Eine falsche Drehstellung des Bolzens 7 kann durch Drehen des Bolzens mittels des Betätigungsklotzes 11 korrigiert werden. Schließlich schiebt man den Bolzen 7 durch Drükken auf sein in der Zeichnung linkes Ende so weit nach rechts, daß die Enden des Stiftes 16 aus den Längsnuten 19 herauskommen, so daß der Bolzen mittels des Betätigungsklotzes 11 gedreht werden kann, z.B. um 90°, so daß die beiden Enden des Stiftes unter der Wirkung der Feder 8 in die Rasten 18 einrasten und dadurch das Verbindungsstück 6 sichern.

Das Öffnen des Kettengliedes erfolgt in umgekehrter Reihenfolge der angegebenen Handgriffe.

Sind in Umfangsrichtung der Schulter 17a zwei oder mehr, in ihrer Höhe gestufte Rasten 18 vorgesehen, so sind zweckmäßigerweise vor den Rasten schräg-hoch-laufende Flächen vorhanden, so daß nur durch Drehen des Betätigungsklotzes 11 in die ansteigende Richtung der Schulterflächen 17a der Bolzen 7 durch die auf den Flächen gleitenden Nocken 16 gegen die Kraft der Feder 8 in der Zeichnung nach rechts gezogen wird. Nach Überschreiten der letzten Rasten fluchten die Nocken 16 mit den Nuten 19 der Bohrung 14, so daß der Bolzen 7 mit dem Verbindungsstück 6 aus dem Kettenglied entfernt werden kann.

## Patentansprüche

1. Kettenglied (1) mit einem unterbrochenen Schenkel (2), dessen Unterbrechungsöffnung durch ein seitlich einsetzbares Verbindungsstück (6) überbrückbar ist, in dem ein in Einsatzrichtung verlaufender und in dieser Richtung in dem Verbindungsstück (6) gegen die Kraft einer Feder von außen her längsverschiebbarer Bolzen (7) drehbar gelagert ist, der seitlich vorstehende Nocken (16) oder dergleichen aufweist, mit denen durch Drehen des Bolzens Anlageflächen (17) des Kettengliedes (1) hintergriffen werden und dadurch das Verbindungsstück (6) in seiner Schließlage gesichert ist, wobei das freie Ende (15) des Bolzens bei in die Unterbrechungsöffnung eingesetztem Verbindungsstück in eine Bohrung (14) des nicht unterbrochenen Schenkels des Kettengliedes hineinragt, **dadurch gekennzeichnet**, daß die Nocken (16) am freien Ende (15) des Bolzens (7) und die Anlageflächen (17) für die Nocken axial innerhalb der Bohrung (14) vorgesehen sind, die mit dem Nockenquerschnitt entsprechenden Durchführungsnuten (19) versehen ist.

2. Kettenglied nach Anspruch 1, **dadurch gekennzeichnet**, daß die Anlageflächen (17) für die Nocken (16) des Bolzens (7) durch eine Schulter (17a) der Bohrung (14) gebildet sind.

3. Kettenglied nach Anspruch 2, **dadurch gekennzeichnet**, daß in der Schulter (17a) Rasten (18) für die Nocken (16) vorgesehen sind.

4. Kettenglied nach Anspruch 3, **dadurch gekennzeichnet**, daß für jeden Nocken (16) zwei oder mehr Rasten (18) in Umfangsrichtung hintereinander vorgesehen sind, die in ihrer Höhe gestuft sind.

5. Kettenglied nach Anspruch 1, **dadurch gekennzeichnet**, daß auf dem Bolzen (7) ein unrunder Betätigungsklotz (11) undrehbar, aber begrenzt längsverschieblich angeordnet ist, der so bemessen ist, daß er bei eingesetztem Verbindungsstück (6) zwischen den beiden Schenkeln (2, 3a, 3b) des Kettengliedes (1) geführt ist.

6. Kettenglied nach Anspruch 5, **dadurch gekennzeichnet**, daß der Betätigungsklotz (11) vierkantig ist.

7. Kettenglied nach Anspruch 5 oder 6, **dadurch gekennzeichnet**, daß der Betätigungsklotz (11) auf seinen Seitenflächen Sichtmerkmale aufweist, aus denen man erkennen kann, ob der Bolzen (7) sich in Einraststellung befindet oder nicht.

## Claims

1. Chain link (1) with an open limb (2), whose break opening may be bridged by a connecting piece inserted sidewards and in which a bolt capable of displacement and rotation from outside against the force of a spring is lodged in the direction of insertion. This bolt has cams or such like on its sides by means of which the bearing surfaces of the chain link may be encompassed through turning the bolt and in this way the connecting piece secured in its locking position, whereby the free end of the bolt protrudes in the boring of the closed limb of the chain link through the connecting piece inserted in the break opening, **characterized in that**, that the cams (16), provided with guiding grooves corresponding to the cross-section of the cams, at the free end (15) of the bolt (7) and the bearing surfaces (17) for the cams are provided axially within the boring (14).

2. Chain link according to claim 1, **characterized in that**, the bearing surfaces (17) for the cams (16) of the bolt (7) are formed by the collar (17a) of the boring (14).

3. Chain link according to claim 2, **characterized in that**, notches are provided for the cams (16) in the collar (17a).

4. Chain link according to claim 3, **characterized in that**, two or more notches (18), graduated in height, are provided one after the other in the radial direction for each cam (16).

5. Chain link according to claim 1, **characterized in that**, a noncircular actuating clump (11) is attached to the bolt (7), which is incapable of rotation but, to a certain extent, capable of longitidunal displacement and dimensioned in such a way that, when the connecting piece (6) is inserted it is led between the two limbs (2, 3a, 3b) of the chain link (1).

6. Chain link according to claim 5, **characterized in that** the actuating clump (11) is quadratic.

7. Chain link according to claim 5 or 6, **characterized in that**, theactuating clump (11) has visible features, from which it may be ascertained whether or not the bolt (7) is in the latched-on position.

## Revendications

1. Maillon (1) avec une branche interrompue (2) dont l'ouverture peut être fermée par une pièce de raccord (6) latéralement insérable, dans lequel est placé en direction d'insertion et de manière pivotante un boulon (7) qui est longitudinalement déplaçable par ailleurs dans la pièce de raccord dans cette direction d'insertion contre la force d'un ressort et qui présente des mentonnets (16) latéralement saillants ou quelque chose de pareil qui, par rotation du boulon, saisissent des surfaces de contact (17) du maillon (1) par derrière de sorte qu'ils arrêtent ainsi la pièce de raccord (6) dans sa position de fermeture, l'extrémité libre (15) du boulon s'étendant dans un alésage (14) de la branche non interrompue du maillon lorsque la pièce de raccord est insérée dans l'ouverture, **caractérisé en ce que** les mentonnets (16) sont prévus à l'extrémité libre (15) du boulon (7) et les surfaces de contact (17) pour les mentonnets sont prévues en position axiale à l'intérieur de l'alésage (14) qui est muni de rainures de passage (19) correspondantes à la section des mentonnets.

2. Maillon selon revendication 1, **caractérisé en ce que** les surfaces de contact (17) pour les mentonnets (16) du boulon (7) sont formées par un épaulement (17a) de l'alésage (14).

3. Maillon selon revendication 2, **caractérisé en ce que** dans l'épaulement (17a) sont prévu des crans (18) pour les mentonnets (16).

4. Maillon selon revendication 3, **caractérisé en ce que** pour chaque mentonnet (16) sont prévu deux crans (18) ou plus arrangés en étages l'un après l'autre en direction circonférentielle.

5. Maillon selon revendication 1, **caractérisé en ce que** sur le boulon (7) est arrangé de manière non pivotante, mais longitudinalement mobile dans certaines limites un bloc de commande non rond (11), qui est dimensionné de telle manière qu'il est guidé entre les deux branches (2, 3a, 3b) du maillon (1) lorsque la pièce de raccord (6) est insérée.

6. Maillon selon revendication 5, **caractérisé en ce que** le bloc de commande (11) a la forme d'un carré.

7. Maillon selon revendication 5 ou 6, **caractérisé en ce que** le bloc de commande (11) présente à ses faces latérales des marques qui permettent de déterminer si le boulon (7) est en position crantée ou non.
